Europäisches Patentamt

European Patent Office

Office européen des brevets

(19)

(11) Veröffentlichungsnummer: **0 049 327**
**B2**

(12) **NEUE EUROPÄISCHE PATENTSCHRIFT**

(45) Veröffentlichungstag der neuen Patentschrift:
30.05.90

(51) Int. Cl.⁵: **F 16 K 11/06,** F 16 K 3/08

(21) Anmeldenummer: **81105141.6**

(22) Anmeldetag: **02.07.81**

(54) **Mehrwege-Schieberventil.**

(30) Priorität: **04.10.80 DE 3037675**

(43) Veröffentlichungstag der Anmeldung:
**14.04.82 Patentblatt 82/15**

(45) Bekanntmachung des Hinweises auf die
Patenterteilung:
**18.04.84 Patenblatt 84/16**

(45) Bekanntmachung des Hinweises auf die
Entscheidung u̅ber den Einspruch:
**30.05.90 Patentblatt 90/22**

(84) Benannte Vertragsstaaten:
**AT CH DE FR GB IT LI NL SE**

(56) Entgegenhaltungen:
**DE-C- 823 555**
**FR-A-2 439 345**
**FR-A-2 444 871**
**GB-A-1 078 599**

**BOSCH VDT-AKB 130/3 BLATT 1**

(73) Patentinhaber: **WABCO Westinghouse**
**Fahrzeugbremsen GmbH**
**Am Lindener Hafen 21 Postfach 91 12 80**
**D-3000 Hannover 91 (DE)**

(72) Erfinder: **Bauer, Adolf**
**Menzenweg 11**
**D-3013 Barsinghausen (DE)**
Erfinder: **Rodriguez, José A.**
**Melanchthonstrasse 21**
**D-3008 Garbsen 4 (DE)**
Erfinder: **Geiger, Hartmut**
**Kochlandweg 21**
**D-3008 Garbsen (DE)**

(74) Vertreter: **Schrödter, Manfred**
**WABCO Westinghouse Fahrzeugbremsen**
**GmbH Am Lindener Hafen 21 Postfach 91 12 80**
**D-3000 Hannover 91 (DE)**

Courier Press, Leamington Spa, England.

**Beschreibung**

Die Erfindung betrifft ein Mehrwege-Schieberventil gemäß dem Oberbegriff des Patentanspruchs 1. Derartige Mehrwege-Schieberventile werden als Flach-Schieberventile ausgebildet, z.B. auf Schalthebeln für Getriebeschaltungen von Nutzfahrzeugen montiert, um so Druckmittel, welches zur Betätigung von Schalthilfsmitteln benötigt wird, steuern zu können.

Ein Mehrwege-Schieberventil der eingangs genannten Art ist bekannt (WABCO Fahrzeugbremsen GmbH, Katalogblatt 463 053, Ersatzteilkatalog von 1978).

Je nach Schaltstellung wird entweder die als Druckmitteleinlaß dienende Bohrung von dem Dichtungskörper umschlossen oder es werden die erwähnte Bohrung und die mit einem Verbraucher verbundene als Druckmittelauslaß dienende Bohrung von dem Dichtungskörper umschlossen, so daß diese Bohrungen miteinander verbunden, jedoch zum Ventilgehäuse (Boden-Deckel) hin abgeschlossen sind.

Wenn die als Einlaß dienende Bohrung mit der zum Verbraucher führenden, als Auslaß dienenden Bohrung verbunden ist, bleibt die zur Atmosphäre führende Entlüftungsbohrung frei. Ist dagegen die als Einlaß dienende Bohrung für sich alleine abgesperrt, so bleiben zwecks Entlüftens des mit dem Auslaß verbundenen Verbrauchers die als Auslaß dienende Bohrung und die Entlüftungsbohrung frei.

Das aus dem Verbraucher austretende Druckmittel gelangt über den Innenraum des Ventilgehäuses zur Entlüftungsbohrung.

Dies hat den Nachteil, daß während der gesamten Dauer des Entlüftungsvorganges das Druckmittel nicht nur wie gewünscht über die Entlüftungsbohrung zur Atmosphäre, sondern auch unkontrolliert durch den Spalt zwischen der Grundplatte und dem als Deckel dienenden Ventilschieber hindurch ins Freie gelangt.

Bei der Verwendung eines solchen Mehrwege-Flachschieberventils in der Führerkabine eines Nutzfahrzeugs kann dies gegebenenfalls zu Belästigungen des Fahrers durch öl- und alkoholhaltige Luft führen.

Der Erfindung liegt deshalb die Aufgabe zugrunde, ein Mehrwegeventil der eingangs genannten Art zu scahffen, welches das Austreten von Druckmittel aus dem Ventilgehäuse in jeder Schaltstellung verhindert.

Diese Aufgabe wird mit den im Patentanspruch 1 angegebenen Mitteln gelöst. Vorteilhafte Augestaltungen und Weiterbildungen der Erfindung sind in den Unteransprüchen angegeben.

Die Erfindung zeichnet sich insbesondere dadurch aus, daß bei einer Ausbildung der Dichtung als Mehrkammerdichtung insbesondere mit entsprechend breiten Stegen zwischen den einzelnen Kammern auch in den Zwischenstellungen kein Druckmittel aus dem Ventilgehäuse austreten kann, wie es sonst bei Mehrwege-Flachschieberventilen, die mit mehreren Einzeldichtungen ausgerüstet sind, der Fall ist.

Die Erfindung wird anhand eines Ausführungsbeispieles, das in der Zeichnung dargestellt ist, näher erläutert.

Es zeigen:

Fig. 1 ein vereinfacht dargestelltes Mehrwege-Flachschieberventil im Schnitt;

Fig. 2 und Fig. 3 je eine Draufsicht eines Mehrwege-Flachschieberventils bei abgenommenem Deckel und unterschiedlichen Schaltstellungen und

Fig. 4. eine aus zwei miteinander verbundenen Dichtungskörpern bestehende Dichtung für das erfindungsgemäße Mehrwegeventil.

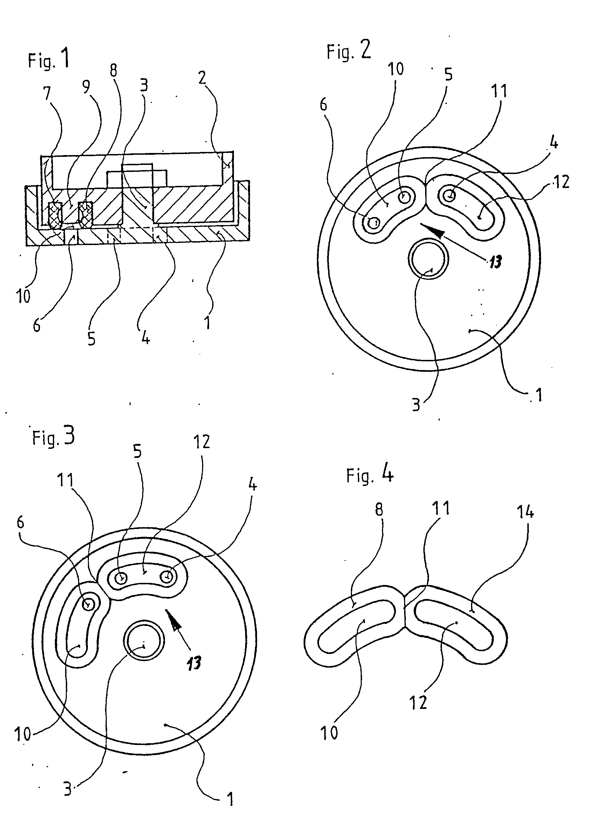

In der Fig. 1 ist im Schnitt ein 3/2-Wege-Flachschieberventil dargestellt, welches sich aus einem als Grundplatte dienenden topfförmig ausgebildeten Boden 1 und einem in diesen eingeschobenen als Ventilschieber dienenden Deckel 2 zusammensetzt. Der Deckel 2 ist mittels eines auf dem Boden 1 befestigten Zapfens 3 drehbar gelagert. Im Boden 1 sind drei mit Gewinde versehene Bohrungen für Druckmittelanschlüsse angeordnet, welche als Einlaßöffnung 6, Auslaßöffnung 5 und Entlüftungsbohrung 4 dienen. Die Enlaßöffnung 6 ist mit einer nicht dargestellten Druckmittelquelle verbunden. Die Auslaßöffnung 5 steht mit einem ebenfalls nicht gezeigten Verbraucher in Verbindung und die Entlüftungsbohrung 4 führt zur Atmosphäre. In den Boden des Deckels 2 ist eine U-förmige Nut 7 eingearbeitet, welche zur Aufnahme eines Dichtungskörpers 8 dient. Die Tiefe der U-förmigen Nut 7 ist so bemessen, daß der Dichtungskörper 8 ein Stück aus ihr herausragt und auf diese Art und Weise zusammen mit einem Steg 9 der U-förmigen Nut 7 eine Kammer 10 bildet, die bei entsprechender Schaltstellung des Ventils als ein erster überströmkanal für zwei Bohrungen dient nämlich Auslaßöffnung 5 und Einlaßöffnung 6.

Fig. 2 zeigt eine Draufsicht auf ein Mehrwege-Flachschieberventil bei abgenommenem Deckel. Der normalerweise im Deckel des Ventils angeordnete Dichtungskörper ist in diesem Ausführungsbeispiel des besseren Verständnisses wegen lose auf den Boden des Ventils aufgelegt dargestellt.

Im als Grundplatte dienenden topfförmigen Boden 1 eines Mehrwege-Flachschieberventils sind drei Bohrungen angeordnet, die als Einlaßöffnung 6, als Auslaßöffnung 5 und als Entlüftungsbohrung 4 dienen. Die Einlaßöffnung 6 ist mit einer nicht dargestellten Druckmittelquelle verbunden, die Auslaßöffnung 5 steht mit einem nicht gezeigten Verbraucher in Verbindung und die Entlüftungsbohrung 4 führt zur Atmosphäre. Ein mit einer Gewindebohrung versehener Zapfen 3 ist auf dem Boden 1 des Ventils angeordnet, und dient zur drehbaren Befestigung eines nicht dargestellten als Ventilschieber dienenden Ventildeckels. Eine in etwa nierenförmig ausgebildete Dichtung 13, die sich aus einem ersten Dichtungskörper und einem mit diesem einstückig ausgebildeten weiteren Dichtungskörper zusammensetzt, bildet mittels des ersten Dichtungskörpers eine als erster überströmkanal dienende erste Kammer 10 und mittels des weiteren Dichtungskörpers eine als weiterer überströmkanal dienende zweite Kammer 12. Die beiden Kammern 10, 12 sind durch einen als Zwischenwand ausgebildeten Steg 11 voneinander getrennt. Die weitere Kammer 12 dient als überströmkanal für die Auslaßöffnung 5 und die nicht von der ersten Kammer überdeckte Entlüftungsbohrung 4. Die von den beiden Dichtungskörpern gebildete Dichtung 13 ist so angeordnet, daß alle Bohrungen in jeder beliebigen Stellung des Ventilschiebers gegenüber dem Spalt zwischen der Grundplatte 1 und dem Ventilschieber abgedichtet sind. In dieser Stellung umschließt die Kammer 10 die Einlaßöffnung 6 sowie die Auslaßöffnung 5, so daß diese öffnungen gegen den Ventilgehäuseinnenraum druckdicht abgeschlossen sind. Die zweite Kammer 12 umschließt die Entlüftungsbohrung 4, so daß die Entlüftungsbohrung 4 ebenfalls gegen den Ventilgehäuseinnenraum druckdicht abgeschlossen ist.

In der Fig. 3 wird eine der in Fig. 2 dargestellten Ansicht eines Mehrwege-Flachschieberventil gleiche Ansicht gezeigt, jedoch in einer anderen Schaltstellung. Die Kammer 10 umschließt die Einlaßöffnung 6 und die Kammer 12 die Auslaßöffnung 5 sowie die Entlüftungsbohrung 4, so daß alle drei öffnungen gegen den Ventilgehäuseinnenraum druckdicht abgeschlossen sind. Die Zwischenwand 11 ist in ihrer Stärke so ausgelegt, daß sie in einer Schalt-Mittelstellung, d.h., beim überfahren einer Bohrung, diese Bohrung vollständig abdeckt. In der in diesem Ausführungsbeispiel gezeigten Schaltstellung dient die Kammer 12 als überströmkanal von der Auslaßöffnung 5 zur Entlüftungsbohrung 4.

Die Fig. 4 zeigt eine Draufsicht auf die aus zwei miteinander verbundenen Dichtungskörpern bestehende Dichtung für das erfindungsgemäße Mehrweegeventil.

Diese Dichtung ist als Formteil ausgebildet und setzt sich aus zwei eine Einheit bildenden Dichtungskörpern 8, 14 zusammen, wobei die beiden miteinander verschmolzenen Stirnseiten der beiden Dichtungskörper 8, 14 eine Zwischenwand 11 für den freien Innenraum der Dichtung bilden und so den freien Innenraum der Dichtung in zwei Kammern 10, 12 aufteilen. Die beiden Dichtungskörper 8, 14 können in ihrem Querschnitt unterschiedliches Profil und somit unterschiedliche Elastizität aufweisen.

Auf diese Art und Weise ist es möglich, z.B. im Bereich der Einlaßöffnung, in welchem ein hoher Druck ansteht, eine hohe Flächenpressung zwischen den abzudichtenden Teilen und dem Dichtungskörper zu haben und im Bereich der Entlüftungsbohrung eine niedrige Flächenpressung zwischen den abzudichtenden Teilen und dem Dichtungskörper zu erzielen.

Dies hat den Vorteil, daß das Ventil sich leichter und schneller schalten läßt.

Es ist selbstverständlich auch möglich, den freien Innenraum der Dichtung durch mehrere Zwischenwände in mehrere Kammern zu unterteilen, um sie in Wegventilen mit einer Vielzahl von Ausgängen und Eingängen einsetzen zu können.

## Patentansprüche

1. Mehrwege-Schieberventil, bestehend aus einer Grundplatte (1) mit mehreren Bohrungen (4, 5, 6) für Druckmittelanschlüsse und einem Ventilschieber (2) welcher über die Grundplatte (1) führbar ist, sowie einem ringförmigen Dichtungskörper (8), der in einer im Ventilschieber (2) angeordneten Nut (7) gelagert ist, derart, daß der ringförmige Dichtungskörper (8) aus dem Ventilschieber (2) herausragt und mit diesem sowie mit der Grundplatte (1) eine abgedichtete als erster Überströmkanal dienende Kammer (10) bildet, wobei der Dichtungskörper (8) so bemessen und so angeordnet ist, daß in wenigstens einer Schaltstellung des Ventilschiebers (2) von der als erster Überströmkanal dienenden Kammer (10) wenigstens zwei erste Bohrungen (6, 5) überdeckt werden; dadurch gekennzeichnet, daß wenigstens ein weiterer, ebenfalls in einer im Ventilschieber (2) angeordneten Nut gelagerter ringförmiger Dichtungskörper (14) vorgehesen ist, der einstückig mit dem ersten Dichtungskörper (8) ausgebildet ist und eine weitere als Überströmkanal dienende Kammer (12) für wenigstens eine der ersten Bohrungen (6, 5) und eine nicht von der ersten Kammer (10) überdeckte weitere Bohrung (4) bildet, wobei die von den beiden Dichtungskörperen (8, 14) gebildete Dichtung (13) so angeordnet ist, daß alle Bohrungen (4, 5, 6) in jeder beliebigen Stellung des Ventilschiebers (2) gegenüber dem Spalt zwischen der Grundplatte (1) und dem Ventilschieber (2) abgedichtete sind, und daß ein die beiden als Überströmkanäle dienenden Kammern (10, 12) voneinander trennender Steg (11) so breit ausgebildet ist, daß jede vom Steg (11) zu überfahrende Bohrung während des Überfahrens vom Steg (11) abgedeckt wird.

2. Mehrwege-Schieberventil nach Anspruch 1, dadurch gekennzeichnet, daß der Ventilschieber (2) drehbar über der Grundplatte (1) angeordnet ist.

3. Mehrwege-Schieberventil nach wenigstens einem der vorhergehenden Ansprüche, dadurch gekennzeichnet, daß die eine als Entlüftungsbohrung dienende Bohrung (4) überdeckende Kammer (12) von einem Dichtungskörper (14) gebildet ist, dessen Elastizität geringer ist als die Elastizität der übrigen Dichtungskörper (8).

## Revendications

1. Distributeur à tiroir à plusieurs voies, comprenant une plaque de base (1) présentant plusieurs perçages (4, 5, 6) pour des raccords de fluide sous pression et un tiroir de distributeur (2) qui est déplaçable sur la plaque de base (1), ainsi qu'un corps annulaire d'étanchéité (8) qui est logé dans une rainure (7) ménagée dans le tiroir (2) de manière que le corps annulaire d'étanchéité (8) fase saillie par rapport au tiroir (2) et forme avec celui-ci, ainsi qu'avec la plaque de base (1), une chambre (10) fermée à joint étanche, servant de premier canal de débordement, le corps d'étanchéité (8) étant dimensionné et agencé de manière que dans au moins une position de commande du tiroir (2), la chambre (10), servant de premier canal de débordement, recouvre au moins deux premiers perçages (6, 5); caractérisé en ce qu'au moins un corps annulaire d'étanchéité (14) supplémentaire est prévu, logé également dans une rainure ménagée dans le tiroir (2), qui est réalisé d'un seul tenant avec le premier corps d'étanchéité (8) et forme une chambre (12) supplémentaire, servant de canal de débordement, pour au moins l'un des premiers perçages (6, 5) et un perçage (4) supplémentaire non recouvert par le première chambre (10), la garniture d'étanchéité, (13) formée par les deux corps d'étanchéité (8, 14), étant disposée de manière que tous les perçages (4, 5, 6) soient étanchés, dans n'importe quelle position du tiroir (2), vis-à-vis de la fente entre la plaque de base (2) et le tiroir (2), et qu'un voile (11), séparant l'une de l'autre les deux chambres (10, 12) servant de canaux de débordement, est réalisé avec une largeur telle que chaque perçage au-dessus duquel doit passer le voile (11) est recouvert par le voile (11) pendant son passage.

2. Distributeur à tiroir à plusieurs voies selon la revendication 1, caractérisé en ce que le tiroir (2) est disposé rotatif au-dessus de la plaque de base (1).

3. Distributeur à tiroir à plusieurs voies selon au moins une des revendications précédentes, caractérisé en ce que la chambre (12) recouvrant un perçage (4) servant d'orifice d'échappement, est formée par un corps d'étanchéité (14) dont l'élasticité est inférieure à l'élasticité de l'autre ou des autres corps d'étanchéité (8).

**Claims**

1. Multi-way slide valve comprising a base plate (1) having a plurality of bores (4, 5, 6) for pressure medium connections, a valve slide (2) which can be guided over the base plate (1), and an annular sealing member (8) which is mounted in such a manner in a groove (7) arranged in the valve slide (2) that the annular sealing member (8) projects out of the valve slide (2) and, together with the latter and with the base plate (1), forms a sealed chamber (10) which serves as a first transfer channel, the dimensions of the sealing member (8) being such and the sealing member (8) being so arranged that in at least one switching position of the valve slide (2) at least two first bores (6, 5) are covered by the chamber (10) serving as first transfer channel, characterised in that at least one further annular sealing member (14) is provided which is likewise mounted in a groove arranged in the valve slide (2) and which is constructed in one piece with the first sealing member (8) and forms a further chamber (12) serving as transfer channel for at least one of the first bores (6, 5) and a further bore (4) that is not covered by the first chamber (10), the seal (13) formed by the two sealing members (8, 14) being so arranged that in any desired position of the valve slide (2) all the bores (4, 5, 6) are sealed with respect to the gap between the base plate (1) annd the valve slide (2), and that a cross-piece (11) separating from one another the two chambers (10, 12) serving as transfer channels is of such a width that each bore that is traversed by the cross-piece (11) is covered as the cross-piece (11) passes over.

2. Multi-way slide valve according to claim 1, characterised in that the valve slide (2) is arranged above the base plate (1) in such a manner that it is rotatable.

3. Multi-way slide valve according to at least one of the preceding claims, characterised in that a chamber (12) covering a bore (4) serving as a venting bore is formed by a sealing member (14) the resilience of which is less than the resilience of the other sealing members (8).

Fig. 1

Fig. 2

Fig. 3

Fig. 4